# EUROPÄISCHE PATENTSCHRIFT

(11) **EP 2 748 478 B1**
(45) Veröffentlichungstag und Bekanntmachung des Hinweises auf die Patenterteilung: **14.10.2015**
(21) Anmeldenummer: 12753058.2
(22) Anmeldetag: 07.08.2012
(51) Int. Cl.: F16D 13/75

(54) **KUPPLUNGSVORRICHTUNG**
COUPLING DEVICE
DISPOSITIF D'EMBRAYAGE

(30) Priorität: 24.08.2011 DE 102011081476; 05.12.2011 DE 102011087733
(43) Veröffentlichungstag der Anmeldung: 02.07.2014
(73) Patentinhaber: Schaeffler Technologies AG & Co. KG, 91074 Herzogenaurach (DE)
(72) Erfinder: RABER, Christoph, 66564 Ottweiler-Steinbach (DE)
(86) Internationale Anmeldenummer: PCT/DE2012/000796
(87) Internationale Veröffentlichungsnummer: WO 2013/026438

(56) Entgegenhaltungen:
- DE-A1-102005 058 844
- DE-A1-102008 051 100
- US-A- 4 228 883

## Beschreibung

Die vorliegende Erfindung betrifft eine Kupplungsvorrichtung gemäß dem Oberbegriff des Patentanspruchs 1.

Aus der DE 10 2008 051 100 A1 ist eine Kupplungsvorrichtung gemäß dem Oberbegriff des Patentanspruchs 1 bekannt. Die Kupplungsvorrichtung weist eine durch ein Hebelelement einund ausrückbare, im eingerückten Zustand reibschlüssige Drehmomentübertragungseinrichtung und eine Verschleißnachstelleinrichtung auf. Die Verschleißnachstelleinrichtung weist einen drehbaren und durch das Hebelelement klemmbaren Rampenring, sowie einen auf den Rampenring wirkenden, drehbar gelagerten Spindeltrieb mit einer Spindelwelle auf. Auch aus der DE 10 2005 058 844 A1 ist eine gattungsgemässe Kupplungsvorrichtung bekannt.

Durch die Verschleißnachstelleinrichtung kann der sich infolge Belagsverschleiß der Reibbeläge ändernde Betriebspunkt der Kupplungsvorrichtung selbsttätig nachgestellt werden. Hierbei wird der Rampenring durch den Spindeltrieb bei sensiertem Kupplungsverschleiß verdreht, wofür an einem Gehäuse der Kupplungsvorrichtung eine Klinke befestigt ist. Die gehäusefeste Klinke steht mit einem Ritzel des Spindeltriebs in formschlüssigem Eingriff, um beim Einrücken der Drehmomentübertragungseinrichtung den Verschleißzustand durch Überspringen eines Ritzelzahns zu sensieren, und um beim Ausrücken der Drehmomentübertragungseinrichtung das Ritzel anzutreiben, wodurch der Rampenring verdreht wird. Aufgrund der Teilung der Zahnstruktur des Ritzels ist die Verschleißsensierung und die Nachstellung des sensierten Kupplungsverschleißes lediglich diskontinuierlich und schrittweise möglich.

Es ist Aufgabe der vorliegenden Erfindung, eine Kupplungsvorrichtung anzugeben, bei der ein sich ändernder Betriebspunkt auf einfache Art und Weise möglichst genau korrigiert werden kann, und bei der gleichzeitig die Funktionssicherheit gesteigert werden kann.

Erfindungsgemäß gelöst wird diese Aufgabe durch eine Kupplungsvorrichtung gemäß Patentanspruch 1 mit zumindest einer in axialer Richtung durch ein Hebelelement einund/oder ausrückbaren, im eingerückten Zustand reibschlüssigen Drehmomentübertragungseinrichtung und zumindest einer Verschleißnachstelleinrichtung, die zumindest einen drehbaren und durch das Hebelelement zumindest zeitweise klemmbaren Rampenring und zumindest einen auf den Rampenring wirkenden, drehbar gelagerten Spindeltrieb mit einer Spindelwelle aufweist. Da die Verschleißnachstelleinrichtung zumindest zwei stufenlose, in unterschiedliche Drehrichtungen wirkende Freilaufeinheiten aufweist, von denen eine erste Freilaufeinheit zur Drehung der Spindelwelle bei einem sensierten Verschleißzustand der Drehmomentübertragungseinrichtung ausgebildet ist, und von denen eine zweite Freilaufeinheit zur Verhinderung einer Rückdrehung der Spindelwelle ausgebildet ist, kann zum einen ein sich ändernder Betriebspunkt der Kupplungsvorrichtung auf einfache Art und Weise möglichst genau korrigiert werden, während zum anderen aufgrund der in unterschiedliche Drehrichtungen wirkenden Freilaufeinheiten eine erhöhte Funktionssicherheit gegeben ist. Insbesondere dient die zweite Freilaufeinheit als Rückdrehsicherung, so dass die Sperrung des Spindeltriebs nicht mehr von der Vorlast und der Reibung des Rampenrings im Betriebspunkt der Kupplungsvorrichtung bzw. der Drehmomentübertragungseinrichtung abhängig ist.

Bevorzugte Ausführungsbeispiele der vorliegenden Erfindung sind in den abhängigen Ansprüchen dargelegt.

Die Kupplungsvorrichtung weist vorzugsweise ein Gehäuse auf, in dem die Drehmomentübertragungseinrichtung angeordnet ist. Die Drehmomentübertragungseinrichtung weist vorzugsweise zumindest eine gehäusefeste Gegendruckplatte, zumindest eine drehfest zum Gehäuse gelagerte und bezüglich der Gegendruckplatte in axialer Richtung der Kupplungsvorrichtung begrenzt verlagerbare Anpressplatte und zumindest eine Kupplungsscheibe mit zumindest einem Reibbelag auf, der zwischen der Anpressplatte und der Gegendruckplatte zur Übertragung eines Drehmoments reibschlüssig klemmbar ist. Vorzugsweise sind die beiden stufenlosen Freilaufeinheiten ausgebildet, ein drehrichtungsabhängiges Drehmoment kraftschlüssig, vorzugsweise reibschlüssig, auf eine gemeinsame oder auf verschiedene Spindelwellen zu übertragen.

Insbesondere ist es dabei unter Kosten- und Bauraumaspekten von Vorteil, wenn das Sperrmoment der der zweiten Freilaufeinheit geringer ist als das Sperrmoment der ersten Freilaufeinheit, da die zweite Freilaufeinheit nur das Freilaufmoment des Spindeltriebs bzw. der ersten Freilaufeinheit abstützen muss.

Wenn die Kupplungsscheibe im eingerückten Zustand der Kupplungsvorrichtung bzw. der Drehmomentübertragungseinrichtung zwischen der Anpressplatte und der Gegendruckplatte verspannt ist, erfolgt eine reibschlüssige Übertragung des Drehmoments von der Eingangsseite der Kupplungsvorrichtung, über die Anpressplatte und die Gegendruckplatte auf die Kupplungsscheibe bzw. deren Reibbeläge und von,der Kupplungsscheibe auf die Ausgangsseite der Kupplungsvorrichtung, beispielsweise auf die Eingangswelle eines Getriebes.

Durch eine auf das Hebelelement wirkende Aktoreinrichtung kann die Kupplungsvorrichtung bzw. die Drehmomentübertragungseinrichtung eingerückt bzw. ausgerückt werden. Bei dem Hebelelement kann es sich um eine Tellerfeder, wie sie üblicher Weise bei normaleingerückten Kupplungsvorrichtungen zum Einsatz kommt, oder um eine Hebelfeder, wie sie üblicher Weise bei normal-ausgerückten Kupplungsvorrichtungen zum Einsatz kommt, handeln.

Wenn die Kupplungsvorrichtung als normal-eingerückte Kupplungsvorrichtung ausgebildet ist, überwiegt die Kraft der einrückenden Tellerfeder, die auf die Anpressplatte wirkt, im betätigungsfreien Zustand die Kraft von ausrückenden Blattfedern, die auf die Anpressplatte wirken. Bei der Betätigung wird die Tellerfeder durch die Aktoreinrichtung mit einer Kraft beaufschlagt, durch die die Kupplung ausgerückt wird. Andererseits kann die Kupplungsvorrichtung aber auch als normal-ausgerückte Kupplungsvorrichtung ausgebildet sein, das heißt als Kupplung, bei der die Kraft der ausrückenden Blattfedern, die auf die Anpressplatte wirken, im betätigungsfreien Zustand die Kraft der Hebelfeder, die auf die Anpressplatte wirkt, überwiegt. Bei der Betätigung wird die Hebelfeder durch die Aktoreinrichtung mit einer Kraft beaufschlagt, durch die die Kupplung eingerückt wird.

Die Kupplungsvorrichtung kann gleichermaßen als gedrückte Kupplungsvorrichtung, das heißt als Kupplungsvorrichtung, bei der die Aktoreinrichtung eine drückende Kraft auf die Tellerfeder bzw. die Hebelfeder ausübt, oder als gezogene Kupplungsvorrichtung, das heißt als Kupplungsvorrichtung, bei der die Aktoreinrichtung eine ziehende Kraft auf die Tellerfeder bzw. die Hebelfeder ausübt, ausgebildet sein. Ferner kann die Kupplungsvorrichtung einerseits als Trockenkupplung und andererseits als Nasskupplung ausgebildet sein. Im letztgenannten Fall ist eine Isolation der, insbesondere reibschlüssigen, Freilaufeinheiten vom Nassraum der Kupplungsvorrichtung vorteilhaft.

Darüber hinaus kann die Kupplungsvorrichtung als Einfachkupplung ausgebildet sein, das heißt eine einzige Drehmomentübertragungseinrichtung mit einer Anpressplatte, einer Gegendruckplatte und einer dazwischen klemmbaren Kupplungsscheibe aufweisen, kann jedoch auch als Mehrfachkupplung, insbesondere als Doppelkupplung ausgebildet sein. Bei einer Doppelkupplung teilen sich die beiden Drehmomentübertragungseinrichtungen vorzugsweise eine gemeinsame Gegendruckplatte, die in diesem Zusammenhang auch als Zentralplatte bezeichnet wird.

Bei der Verschleißnachstelleinrichtung handelt es sich vorzugsweise um eine wegbasierte Verschleißnachstelleinrichtung. Der Rampenring der Verschleißnachstelleinrichtung ist in axialer Richtung zwischen der Anpressplatte und dem Hebelelement, insbesondere an einem Kraftrand der Tellerfeder, klemmbar gelagert. Auf seiner dem Hebelelement abgewandten Oberfläche weist der Rampenring Rampen auf, die gleitbeweglich auf Gegenrampen angeordnet sind, so dass bei einer relativen Verdrehung des Rampenrings die Rampen des Rampenrings an den Gegenrampen entlanggleiten, wodurch sich der Abstand zwischen der Anpressplatte und der der Anpressplatte abgewandten Oberfläche des Rampenrings, mit der der Rampenring in Anlage am Hebelelement ist, verringert. Vorzugsweise sind die Gegenrampen einteilig mit der Anpressplatte ausgebildet, und insbesondere in die Anpressplatte eingelassen.

Gemäß einem bevorzugten Ausführungsbeispiel weist die erste Freilaufeinheit oder die zweite Freilaufeinheit einen Hülsenfreilauf auf. Ein Hülsenfreilauf ermöglicht ein besonders sensibles Ansprechverhalten, um die Spindelwelle bei einem sensierten Verschleißzustand der Drehmomentübertragungseinrichtung drehend anzutreiben bzw. um eine Rückdrehung der Spindelwelle entgegen der Verschleißnachstellung zu verhindern.

Gemäß einem weiteren bevorzugten Ausführungsbeispiel weist die zweite Freilaufeinheit oder die erste Freilaufeinheit eine Schlingfeder auf. Beispielsweise kann die erste Freilaufeinheit einen Hülsenfreilauf aufweisen, während die zweite Freilaufeinheit eine Schlingfeder aufweist. Ebenso ist es möglich, dass die erste Freilaufeinheit eine Schlingfeder aufweist, während die zweite Freilaufeinheit einen Hülsenfreilauf aufweist. Die Verwendung einer Schlingfeder ist kostengünstig, und die Schlingfeder zeichnet sich durch ihren einfachen Aufbau aus.

Insbesondere ist es von Vorteil, wenn beide Freilaufeinheiten in unterschiedliche Drehrichtungen wirkende Hülsenfreiläufe aufweisen. Durch die Verwendung von Gleichteilen können die Gesamtkosten zur Herstellung der Kupplungsvorrichtung verringert werden. Alternativ ist es von Vorteil, wenn die beiden Freilaufeinheiten in unterschiedliche Drehrichtungen wirkende Schlingfedern aufweisen. Insbesondere sind diese Schlingfedern in unterschiedliche Richtungen gewickelt.

Gemäß einem weiteren bevorzugten Ausführungsbeispiel ist der Hülsenfreilauf auf der Spindelwelle angeordnet und ausgebildet, abhängig von der Lage eines im Verschleißzustand veränderten Betriebspunkt der Drehmomentübertragungseinrichtung, mit der Spindelwelle zur Verschleißnachstellung durch Verdrehung des Rampenrings relativ zu komplementären Gegenrampen und/oder zur Verhinderung der Rückdrehung der Spindelwelle in Kraftschluss, vorzugsweise in Reibschluss, zu treten.

Gemäß einem weiteren oder einem alternativen bevorzugten Ausführungsbeispiel umschlingt die Schlingfeder die Spindelwelle unter Eigenvorspannung und ist ausgebildet, abhängig von der Lage eines im Verschleißzustand veränderten Betriebspunkts der Drehmomentübertragungseinrichtung, mit der Spindelwelle zur Verschleißnachstellung durch Verdrehung des Rampenrings relativ zu komplementären Gegenrampen und/oder zur Verhinderung der Rückdrehung der Spindelwelle in Kraftschluss, vorzugsweise in Reibschluss, zu treten.

Vorzugsweise sind Federenden der Schlingfeder anpressplattenseitig und sensiereinrichtungsseitig verspannbar, wenn der Spindeltrieb anpressplattenseitig gelagert ist. Wenn der Spindeltrieb kupplungsdeckelseitig gelagert ist, sind die Federenden der Schlingfeder vorzugsweise kupplungsdeckelseitig und sensiereinrichtungsseitig verspannbar. In beiden Fällen wird die Schlingfeder als steuerbarer Freilauf eingesetzt, deren Ansteuerung durch die Sensiereinrichtung in eine Drehrichtung der Spindelwelle ein Drehmoment überträgt. Hierzu wird die Schlingfeder in Folge Eytelweinscher Seilreibung schaltbar und reibschlüssig mit der Spindelwelle verbunden, in dem die Federenden der Schlingfeder entsprechend beaufschlagt werden. Hierbei ist ein Federende anpressplattenseitig, also an einem während eines Betätigungsvorgangs axial verlagerbaren Bauteil, beispielsweise an der Anpressplatte, dem Rampenring, dem Hebelelement bzw. der Tellerfeder oder einem mit dieser verbundenen Bauteil axial abgestützt. Das andere Federende der Schlingfeder ist sensiereinrichtungsseitig, also direkt an der Sensiereinrichtung oder einem mit dieser verbundenen Bauteil abgestützt.

Eine entsprechende Anordnung und Abstützung gilt für den Betätigungshebel eines Hülsenfreilaufs gleichermaßen.

Vorzugsweise ist daher eine Sensiereinrichtung ausgebildet, einen Verschleißzustand der Drehmomentübertragungseinrichtung beim Einrücken der Drehmomentübertragungseinrichtung in Abhängigkeit von einem Abstand zu einem gehäusefesten Bauteil der Kupplungsvorrichtung, vorzugsweise einer Gegendruckplatte der Drehmomentübertragungseinrichtung, zu sensieren. Die erste Freilaufeinheit ist durch die Sensiereinrichtung beim Ausrücken der Drehmomentübertragungseinrichtung zur Verschleißnachstellung durch Drehung der Spindelwelle antreibbar.

Insbesondere ist es von Vorteil, wenn die Sensiereinrichtung einen, vorzugsweise an der Anpressplatte der Drehmomentübertragungseinrichtung angeordneten, vorzugsweise in axialer Richtung verlagerbaren, Finger oder Stift aufweist, durch den ein Betätigungshebel des' Hülsenfreilaufs der ersten Freilaufeinheit oder ein Federende der Schlingfeder der ersten Freilaufeinheit beaufschlagbar ist.

Insgesamt kann der Finger oder Stift anpressplattenseitig angeordnet sein und die Abweichung des Betriebspunkts zur Gegendruckplatte sensieren, oder an der Gegendruckplatte bzw. am Gehäuse angeordnet sein und die Abweichung des Betriebspunkts zur Anpressplatte sensieren. Da die Verdrehung des zwischen der Anpressplatte und der Tellerfeder angeordneten Rampenrings infolge der bei eingerückter Drehmomentübertragungseinrichtung von der Tellerfeder auf die Anpressplatte aufgebrachten Anpresskraft nicht möglich ist, ist es möglich, den zur Korrektur eines verlagerten Betriebspunkts notwendigen Verdrehwinkel in Form eines vorgespannten Zustands der Sensiereinrichtung zwischenzuspeichern und während des nachfolgenden Ausrückvorgangs, bei dem der Rampenring in axialer Richtung entlastet ist, in einen Verdrehwinkel des Rampenrings unter Abbau der Vorspannung zumindest teilweise umzusetzen. In nachfolgenden Schließ- und Öffnungsbetätigungen der Kupplungsvorrichtung, das heißt beim aufeinander folgenden Einrücken und Ausrücken, kann dabei ein zuvor nicht endgültig korrigierter Betriebspunkt laufend weiter korrigiert werden.

Gemäß einem vorteilhaften Ausführungsbeispiel kann die Sensiereinrichtung aus einem an der Anpressplatte entgegen der Wirkung eines Energiespeichers verlagerbar angeordneten, einen Betätigungshebel des Hülsenfreilaufs oder ein Federende der Schlingfeder beaufschlagenden Finger oder Stift gebildet sein. Hierbei bleibt der Betätigungshebel des Hülsenfreilaufs bzw. die Schlingfeder durch den Energiespeicher bei korrektem Betriebspunkt auf der Spindelwelle vorgespannt, so dass selbst bei geöffneter Drehmomentübertragungseinrichtung und lastfreiem Rampenring keine versehentliche Verdrehung des Rampenrings durch Blockade der Spindelwelle durch die erste Freilaufeinrichtung auftritt. Stößt der Finger oder Stift bei sich verlagerndem Betriebspunkt während des Schließvorgangs der Drehmomentübertragungseinrichtung an einem gehäusefesten Anschlag, beispielsweise an der Gegendruckplatte an, wird die erste Freilaufeinheit, das heißt der Hülsenfreilauf oder die Schlingfeder, gegenüber der Spindelwelle entlastet, wobei sich diese gegenüber der Spindelwelle um einen vorgegebenen Betrag verdreht. Beim anschließenden Öffnungsvorgang der Drehmomentübertragungseinrichtung bildet sich durch Beaufschlagung des Betätigungshebels des Hülsenfreilaufs oder der Schlingfeder der Reibschluss wieder aus, wodurch die Verschleißnachstellung unter Verdrehung der Spindelwelle, translatorischer Bewegung der Spindelmutter und damit einhergehend unter Verdrehung des Rampenrings erfolgt. Der den Finger oder Stift in Richtung der Gegendruckplatte vorspannende Energiespeicher kann beispielsweise eine Schraubenfeder sein.

In einem alternativen Ausführungsbeispiel kann die Sensiereinrichtung aus einer am Gehäuse elastisch aufgenommenen, einen Betätigungshebel des Hülsenfreilaufs der ersten Freilaufeinheit oder ein Federende der Schlingfeder der ersten Freilaufeinheit beaufschlagenden Blattfeder gebildet sein. Wird die Anpressplatte bei der Verlagerung des Betriebspunkts in Richtung Gegendruckplatte verlagert, wird die Vorspannung des Betätigungshebels des Hülsenfreilaufs oder der Schlingfeder durch die bevorzugt am Gehäuse aufgenommene Blattfeder aufgehoben und der Betätigungshebel des Hülsenfreilaufs bzw. die Schlingfeder gegen die Spindelwelle verdreht. Beim anschließenden Öffnungsvorgang verdreht sich die Spindelwelle und der Betätigungshebel des Hülsenfreilaufs bzw. die Schlingfeder gemeinsam unter Beaufschlagung durch die Blattfeder zur Nachstellung des Rampenrings.

Die Verschleißnachstellung weist vorzugsweise eine Nachführeinheit zur Nachführung der Vorspannung und/oder der Winkellage der auf der Spindelwelle angeordneten ersten Freilaufeinheit auf. Vorzugsweise ist die Nachführeinheit rampenförmig ausgebildet.

Gemäß einem bevorzugten Ausführungsbeispiel ist die Nachführeinheit in Querrichtung der Kupplungsvorrichtung oder in Umfangsrichtung der Kupplungsvorrichtung verlagerbar. Hierbei ist es von Vorteil, wenn die Nachführeinheit am Rampenring oder an der Spindelmutter des Spindeltriebs befestigt ist oder einteilig mit dem Rampenring oder der Spindelmutter ausgebildet ist. Vorzugsweise befindet sich der Betätigungshebel der Hülsenfreilaufs der ersten Freilaufeinheit oder das Federende der Schlingfeder der ersten Freilaufeinheit mit der Rampe der Nachführeinheit in gleitbeweglicher Anlage.

Gemäß einem weiteren bevorzugten Ausführungsbeispiel stützt sich ein Betätigungshebel des Hülsenfreilaufs der zweiten Freilaufeinheit oder ein Federende der Schwingfeder der zweiten Freilaufeinheit an einer Anpressplatte der Drehmomentübertragungseinrichtung ab. Dies ermöglicht eine besonders zuverlässige Rückdrehsicherung gegen das Freilaufmoment des Spindeltriebs, insbesondere wenn der Rampenring zwischen dem Hebelelement und der Anpressplatte geklemmt ist, und wenn der zuvor erwähnte Finger oder Stift den Betätigungshebel des Hülsenfreilaufs der ersten Freilaufeinheit oder das Federende der Schlingfeder der ersten Freilaufeinheit auslenkt.

Die vorliegende Erfindung wird nachfolgend anhand von bevorzugten Ausführungsbeispielen in Verbindung mit den zugehörigen Figuren näher erläutert. In diesen zeigen:
- Figur 1: ein erstes Ausführungsbeispiel einer Kupplungsvorrichtung mit einer stufenlosen Verschleißnachstelleinrichtung,
- Figur 2: die stufenlose Verschleißnachstelleinrichtung aus Figur 1 in einer Seitenansicht,
- Figur 3: die stufenlose Verschleißnachstelleinrichtung aus Figur 1 in einer Schnittansicht,
- Figur 4: einen Spindeltrieb der stufenlosen Verschleißnachstelleinrichtung aus Figur 1,
- Figur 5: ein zweites Ausführungsbeispiel einer Kupplungsvorrichtung mit einer stufenlosen Verschleißnachstelleinrichtung,
- Figur 6: die stufenlose Verschleißnachstelleinrichtung aus Figur 5 in einer Seitenansicht,
- Figur 7: die stufenlose Verschleißnachstelleinrichtung aus Figur 5 in einer Schnittansicht, und
- Figur 8: einen Spindeltrieb der stufenlosen Verschleißnachstelleinrichtung aus Figur 5.

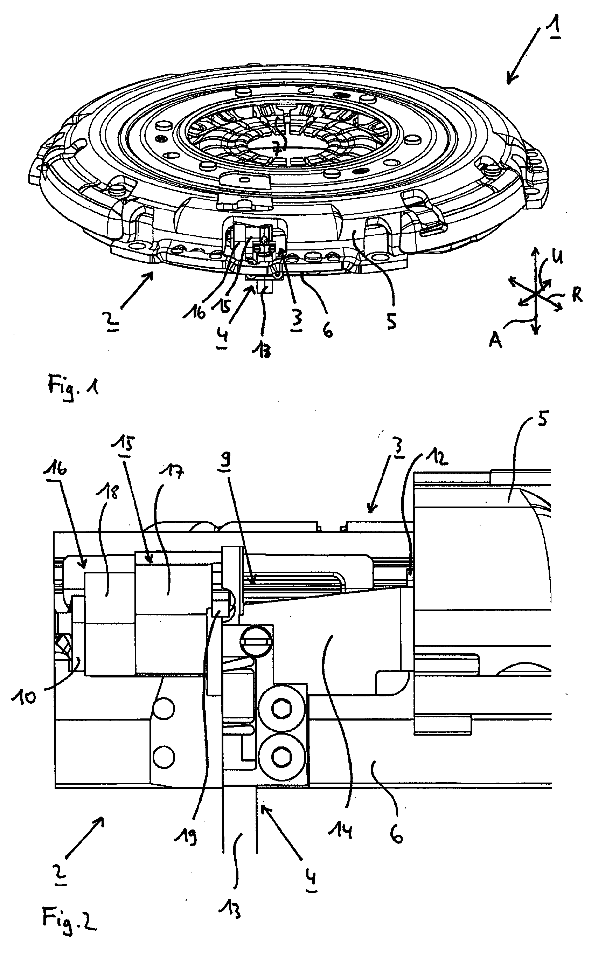

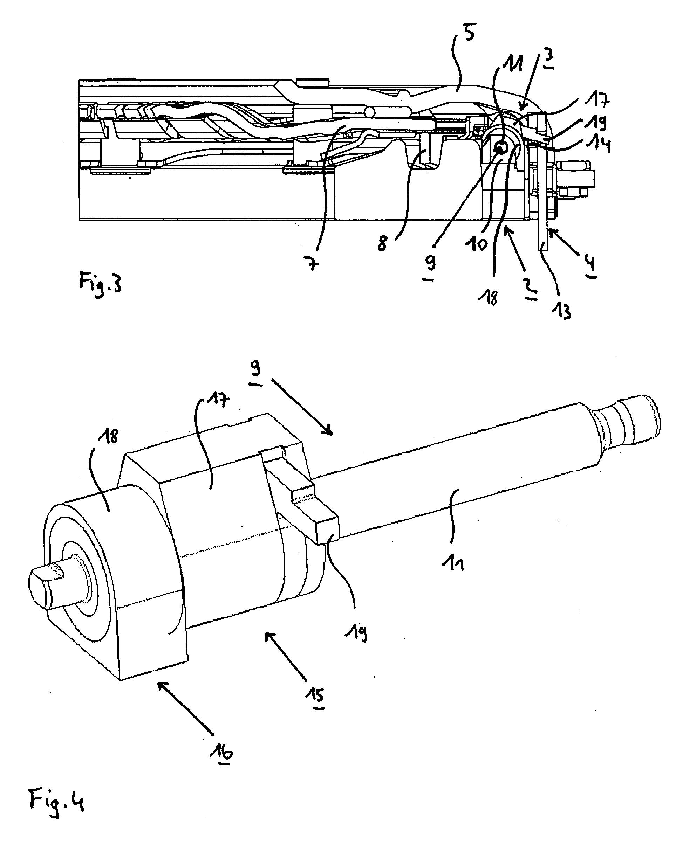

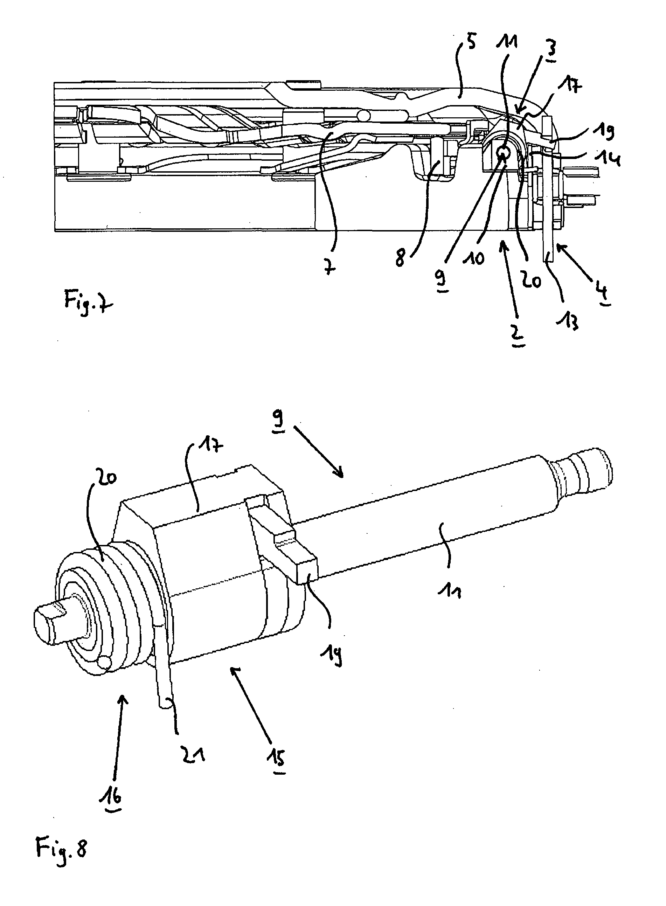

Die Figuren 1 bis 8 betreffen zwei bevorzugte Ausführungsbeispiele einer Kupplungsvorrichtung 1 mit einer stufenlosen Verschleißnachstelleinrichtung 3. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1 bzw. der stufenlosen Verschleißnachstelleinrichtung 3, die Teilkombinationen der im Folgenden zu erläuternden Merkmale aufweisen. Die Kupplungsvorrichtung 1 ist insbesondere als Reibungskupplung ausgebildet und für den Antriebsstrang eines Kraftfahrzeugs vorgesehen.

Die Kupplungsvorrichtung 1 ist drehbar um eine Zentralachse gelagert und weist zumindest eine Drehmomentübertragungseinrichtung 2 auf. Die Drehmomentübertragungseinrichtung 2 weist zumindest eine Anpressplatte 6, zumindest eine nicht dargestellte Gegendruckplatte und zumindest eine in axialer Richtung A der Kupplungsvorrichtung 1 zwischen der Anpressplatte 6 und der Gegendruckplatte angeordnete, nicht dargestellte Kupplungsscheibe auf. Die Gegendruckplatte ist mit einem Gehäuse 5 der Kupplungsvorrichtung 1, insbesondere einem Kupplungsdeckel, fest verbunden, insbesondere verschraubt. Die Anpressplatte 6 ist im Gehäuse 5, insbesondere innerhalb des Kupplungsdeckels, drehfest gelagert und in axialer Richtung A der Kupplungsvorrichtung 1 begrenzt verlagerbar. Insbesondere ist die Anpressplatte 6 mittels mehrerer nicht dargestellter Blattfedern drehfest im Gehäuse 6 befestigt und von der Gegendruckplatte weg, das heißt mit Bezug auf Figur 1 nach oben, vorgespannt.

Darüber hinaus weist die Kupplungsvorrichtung 1 ein Hebelelement 7 auf, das für eine normal-eingerückte Kupplungsvorrichtung 1 als Tellerfeder und für eine normal-ausgerückte Kupplungsvorrichtung 1 als Hebelfeder ausgebildet sein kann. Das Hebelelement 7 ist gehäuseseitig abgestützt und durch einen Aktuator betätigbar. Die gehäuseseitige Abstützung kann beispielsweise durch eine am Kupplungsdeckel befestigte, nicht dargestellte Lagereinheit erfolgen, durch die das Hebelelement 7 verkippbar aufgehängt ist. Hierzu weist die Lagereinheit beispielsweise zwei in axialer Richtung A der Kupplungsvorrichtung 1 beabstandete Drahtringe auf, zwischen denen das Hebelelement 7 sich in radialer Richtung R der Kupplungsvorrichtung 1 erstreckt. Über Hebelspitzen, die in radialer Richtung R auf der Innenseite des, vorzugsweise im Wesentlichen ringförmig ausgebildeten, Hebelelements 7 angeordnet sind, ist das Hebelelement 7 durch den Aktuator betätigbar.

In seinem radialen Außenbereich weist das Hebelelement 7 einen Kraftrand auf. Über einen Rampenring 8, der der Verschleißnachstelleinrichtung 3 zuzuordnen ist, auf die im Folgenden eingegangen wird, wirkt das Hebelelement 7 mittelbar auf die Anpressplatte 6, indem der Kraftrand des Hebelelements 7 an einer hebelelementseitigen, der Anpressplatte 6 abgewandten Oberfläche des Rampenrings 8 anliegt und im eingerückten Zustand der Kupplungsvorrichtung 1 bzw. der Drehmomentübertragungseinrichtung 2 Druck auf den Rampenring 8 ausübt. Dieser Druck wird über die anpressplattenseitige, dem Hebelelement 7 abgewandte Oberfläche des Rampenrings 8 auf die Anpressplatte 6 übertragen.

Bei der normal-eingerückten, in Figur 1 dargestellten Kupplungsvorrichtung 1 überwiegt die wirksame Kraft des als Tellerfeder ausgebildeten Hebelelements 7 die Gegenkraft der Blattfedern, während bei einer normal-ausgerückten Kupplungsvorrichtung 1 die Gegenkraft der Blattfedern die wirksame Kraft des als Hebelfeder ausgebildeten Hebelelements 7 überwiegt. Dementsprechend führt eine Betätigung der Tellerfeder der normal-eingerückten, in Figur 1 dargestellten Kupplungsvorrichtung 1 zum Ausrücken der Kupplungsvorrichtung 1 durch Verkippen bzw. Umschnappen der Tellerfeder, das heißt zum Abhub der Anpressplatte 6 und zur Entfernung der Anpressplatte 6 von der Gegendruckplatte, während eine Betätigung der Hebelfeder bei einer normal-ausgerückten Kupplungsvorrichtung 1 zum Einrücken der Kupplungsvorrichtung durch Verkippen der Hebelfeder führt.

Bei eingerückter Drehmomentübertragungseinrichtung 2 wird ein Drehmoment von der Eingangsseite der Kupplungsvorrichtung 1, beispielsweise von einem Zweimassenschwungrad, über das Gehäuse 5 und sowohl die Gegendruckplatte als auch die Anpressplatte 6, die beide mit dem Gehäuse 5, insbesondere dem Kupplungsdeckel, drehfest verbunden sind, reibschlüssig auf die Kupplungsscheibe übertragen. Von der Kupplungsscheibe, die reibschlüssig zwischen der Gegendruckplatte und der Anpressplatte 6 geklemmt ist, wird das Drehmoment zur Ausgangsseite der Kupplungsvorrichtung 1 übertragen, beispielsweise zu einer Eingangswelle eines Getriebes.

Da aufgrund des Reibschlusses sowohl die Reibbeläge der Kupplungsscheibe als auch in geringerem Maße die Reibflächen der Gegendruckplatte und der Anpressplatte 6 einem Verschleiß unterworfen sind, muss über die Lebensdauer der Kupplungsvorrichtung 1 die Anpressplatte 6 immer näher an die Gegendruckplatte herangerückt werden, um die Abnahme der Dicke der Reibbeläge und der Stärke der Reibflächen in axialer Richtung A zu kompensieren und den Reibschluss herstellen bzw. die Drehmomentübertragungseinrichtung 2 einrücken zu können. Hierzu ist in der Kupplungsvorrichtung 1 die bereits zuvor erwähnte Verschleißnachstelleinrichtung 3 ausgebildet.

Zusätzlich zum zuvor erwähnten Rampenring 8 weist die Verschleißnachstelleinrichtung 3 einen Spindeltrieb 9 auf. Der gesamte Spindeltrieb 9 ist durch zumindest einen Halter 10 drehbar auf Seiten der Anpressplatte 6 gelagert, wobei der Halter 10 beispielsweise mit einer der Kupplungsscheibe abgewandten Seite der Anpressplatte 6 verbunden, insbesondere verschraubt oder vernietet, ist.

Der Spindeltrieb 9 weist eine Spindelwelle 11 und eine Spindelmutter 12 auf. Über die Spindelmutter 12 ist der Spindeltrieb 10 mit dem Rampenring 8 verbunden, wobei eine Drehbewegung der Spindelwelle 11 in eine translatorische Bewegung der Spindelmutter 12 umgesetzt wird, und die translatorische Bewegung der Spindelmutter 12 in eine Drehbewegung des Rampenrings 8 umgesetzt wird. Rampen des Rampenrings 8 sind gleitbeweglich auf Gegenrampen angeordnet, die auf der der Kupplungsscheibe abgewandten Seite der Anpressplatte 6 drehfest mit der Anpressplatte 6 ausgebildet sind, vorzugsweise in die Anpressplatte 6 eingelassen sind.

Ferner sind auf der Spindelwelle 11 zwei stufenlose, in unterschiedliche Drehrichtungen wirkende Freilaufeinheiten 15, 16 angeordnet. Die erste Freilaufeinheit 15 ist zur Drehung der Spindelwelle 11 bei einem sensierten Verschleißzustand der Drehmomentübertragungseinrichtung 2 ausgebildet, während die zweite Freilaufeinheit 16 zur Verhinderung einer Rückdrehung der Spindelwelle 11, das heißt zur Verhinderung einer Drehung der Spindelwelle 11 entgegen der Drehrichtung des sensierten Verschleißzustands, ausgebildet ist. Vorzugsweise sind beide Freilaufeinheiten 15, 16 in Umfangsrichtung U der Kupplungsvorrichtung 1 bzw. in tangentialer Richtung der Kupplungsvorrichtung 1 direkt nebeneinander auf derselben Spindelwelle 11 angeordnet. Jedoch ist es auch möglich, dass die beiden Freilaufeinheiten 15, 16 voneinander beabstandet auf derselben Spindelwelle 11 angeordnet sind. Ebenso wäre es denkbar, dass die beiden Freilaufeinheiten 15, 16 auf unterschiedlichen, beispielsweise drehfest miteinander verbundenen Wellen angeordnet sind.

Im ersten Ausführungsbeispiel der Kupplungsvorrichtung 1 weist die erste Freilaufeinheit 15 einen Hülsenfreilauf 17 auf. Vorzugsweise weist die zweite Freilaufeinheit 16 ebenfalls einen Hülsenfreilauf 18 auf. Somit weisen die beiden Freilaufeinheiten 15, 16 vorzugsweise in unterschiedliche Drehrichtungen wirkende Hülsenfreiläufe 17, 18 auf. Der Hülsenfreilauf 17 der ersten Freilaufeinheit 15 ist auf der Spindelwelle 11 angeordnet und ausgebildet, abhängig von der Lage eines im Verschleißzustand veränderten Betriebspunkts der Drehmomentübertragungseinrichtung 2 mit der Spindelwelle 11 zur Verschleißnachstellung durch Verdrehung des Rampenrings 8 relativ zu den komplementären Gegenrampen in Kraftschluss, insbesondere in Reibschluss zu treten. Der Hülsenfreilauf 18 der zweiten Freilaufeinheit 16 ist auf der Spindelwelle 11 angeordnet und ausgebildet, zur Verhinderung der Rückdrehung der Spindelwelle 11 in Kraftschluss, insbesondere in Reibschluss zu treten. Vorzugsweise stützt sich ein nicht dargestellter Betätigungshebel des Hülsenfreilaufs 18 der zweiten Freilaufeinheit 16 an der Anpressplatte 6 der Drehmomentübertragungseinrichtung 2 ab.

Neben der Verschleißnachstelleinrichtung 3 weist die Kupplungsvorrichtung 1 ferner eine Sensiereinrichtung 4 auf. Die Sensiereinrichtung 4 ist ausgebildet, einen Verschleißzustand der Drehmomentübertragungseinrichtung 2 beim Einrücken der Drehmomentübertragungseinrichtung 2 in Abhängigkeit von einem Abstand zu einem gehäusefesten Bauteil der Kupplungsvorrichtung 1 zu sensieren. Vorzugsweise erfolgt die Sensierung in Abhängigkeit von einem Abstand zur Gegendruckplatte der Drehmomentübertragungseinrichtung 2. Vorzugsweise ist durch die Sensiereinrichtung 4 die erste Freilaufeinheit 15 beim Ausrücken der Drehmomentübertragungseinrichtung 2 zur Verschleißnachstellung antreibbar, wobei der Antrieb der Freilaufeinheit 15 eine Drehung der Spindelwelle 11, und damit einhergehend eine translatorische Bewegung der Spindelmutter 12 und eine Verdrehung des Rampenrings 8 bewirkt.

Konkret weist die Sensiereinrichtung 4 im dargestellten Ausführungsbeispiel einen, vorzugsweise an der Anpressplatte 6 der Drehmomentübertragungseinrichtung 2 angeordneten Finger 13 auf. Der Finger 13 ist in axialer Richtung A der Kupplungsvorrichtung 1 verlagerbar und hierzu beispielsweise gleitbeweglich in einem anpressplattenseitigen Halter gelagert. Durch den in axialer Richtung A verlagerbaren Finger 13 ist ein Betätigungshebel 19 des Hülsenfreilaufs 17 der ersten Freilaufeinheit 15 beaufschlagbar, um bei sensiertem Kupplungsverschleiß die Verschleißnachstelleinrichtung 3 auszulösen, das heißt den sensierten Kupplungsverschleiß wegmäßig kompensieren zu können.

Um zu verhindern, dass im Falle von Kupplungsverschleiß bei jedem Einrücken der Drehmomentübertragungseinrichtung 2 eine Verschleißsensierung erfolgt und folglich bei jedem Ausrücken der Drehmomentübertragungseinrichtung 2 eine Verschleißnachstellung erfolgt, weist die Verschleißnachstelleinrichtung 3 eine Nachführeinheit 14 auf. Die Nachführeinheit 14 ist vorzugsweise rampenförmig ausgebildet und beispielsweise mit der translatorisch beweglichen Spindelmutter 12 fest verbunden oder einteilig mit dieser ausgebildet. Die Nachführeinheit 14 ist angeordnet und ausgebildet, die Nachführung der Vorspannung und/oder der Winkellage der auf der Spindelwelle 11 angeordneten ersten Freilaufeinheit 15 zu gewährleisten.

Im ersten Ausführungsbeispiel befindet sich hierzu der Betätigungshebel 19 des Hülsenfreilaufs 17 der ersten Freilaufeinheit 15 in gleitbeweglicher Anlage mit der rampenförmigen Nachführeinheit 14. Die rampenförmige Nachführeinheit 14 bewirkt nach erfolgter Verschleißnachstellung eine Anhebung des Betätigungshebels 19 des Hülsenfreilaufs 17 der ersten Freilaufeinheit 15, wodurch die Auslöseschwelle für eine nachfolgende Verschleißsensierung - und damit Einhergehen für eine nachfolgende Verschleißnachstellung - erhöht wird.

Aus der Anordnung der Verschleißnachstelleinrichtung 3 in der Kupplungsvorrichtung 1 ergibt sich die folgende Funktionsweise:
Bei nichtverlagertem Betriebspunkt und geschlossener bzw. eingerückter Kupplungsvorrichtung 1 bzw. Drehmomentübertragungseinrichtung 2 kommt der Finger 13 der Sensiereinrichtung 4 allenfalls in Berührung mit der Gegendruckplatte, wird aber nicht in axialer Richtung A verlagert bzw. nur soweit verlagert, dass sein mit dem Betätigungshebel 19 des Hülsenfreilaufs 17 der ersten Freilaufeinheit 15 in Eingriff stehender Eingriffsabschnitt, beispielsweise eine Aussparung im Finger 13, nicht über die rampenförmige Anlagefläche der Nachführeinheit 14 verlagert wird. Durch die axiale Höhe der fingerseitigen Aussparung, in der der Betätigungshebel 19 aufgenommen ist, das heißt durch das Spiel zwischen Anschlägen der Aussparung, kann die Ausbildung des Reibschlusses des Hülsenfreilaufs 17 der ersten Freilaufeinheit 15 zur Spindelwelle 11 gesteuert bzw. eingestellt werden.

Bei einem Öffnen bzw. Ausrücken der Drehmomentübertragungseinrichtung 2 wird die Anpressplatte 6 in axialer Richtung A von der Gegendruckplatte weg verlagert, und der Finger 13 hebt von der Gegendruckplatte ab. So lange kein Verschleiß sensiert worden ist, kommt es zu keiner Verdrehung der Spindelwelle 11 durch den Hülsenfreilauf 17 der ersten Freilaufeinheit 15, da der Betätigungshebel 19 auf der rampenförmigen Anlagefläche der Nachführeinheit 14 aufliegt.

Vermindert sich die Dicke der Reibbeläge infolge von Kupplungsverschleiß, verlagert sich die Anpressplatte 6 und damit der Betriebspunkt der Kupplungsvorrichtung 1 in Richtung Gegendruckplatte, so dass der Finger 13 schon während des Einrückvorgangs der Drehmomentübertragungseinrichtung 2 auf der Gegendruckplatte aufsitzt und in axialer Richtung A beim Fortschritt des Einrückvorgangs verlagert wird. Hierdurch wird der Betätigungshebel 19 des Hülsenfreilaufs 17 der ersten Freilaufeinheit 15 von der rampenförmigen Anlagefläche der Nachführeinheit 14 abgehoben, so dass beim anschließenden Einrücken der Drehmomentübertragungseinrichtung 2 die Verschleißnachstellung durch die erste Freilaufeinheit 15 erfolgt, indem die Spindelwelle 11 durch den Hülsenfreilauf 17 der ersten Freilaufeinheit 15 rotatorisch angetrieben wird, wodurch sich die Spindelmutter 12 translatorisch verlagert und dabei den Rampenring 8 derart verdreht, dass die Rampen des Rampenrings 8 an den in der Anpressplatte 6 eingelassenen Gegenrampen hochgleiten, um den sensierten Kupplungsverschleiß wegmäßig zu kompensieren.

Die zweite Freilaufeinheit 16, im ersten Ausführungsbeispiel der Hülsenfreilauf 18 der zweiten Freilaufeinheit 16, verhindert eine ungewollte Rückdrehung der Spindelwelle 11, so dass die Verschleißnachstelleinrichtung 3 nicht mehr von der Vorlast und der Reibung des Rampenrings 8 im Betriebspunkt der Kupplungsvorrichtung 1 abhängig ist.

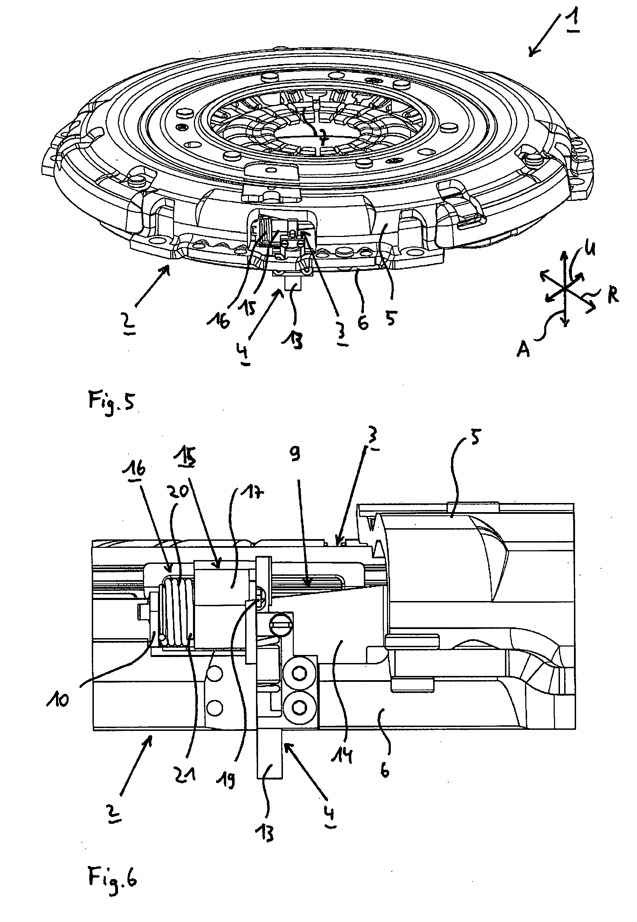

Das in den Figuren 5 bis 8 dargestellte, zweite Ausführungsbeispiel der Kupplungsvorrichtung 1 unterscheidet sich von dem in den Figuren 1 bis 4 dargestellten, ersten Ausführungsbeispiel der Kupplungsvorrichtung 1 dadurch, dass die zweite Freilaufeinheit 16 anstelle des Hülsenfreilaufs 18 eine Schlingfeder 20 aufweist. Ein Federende 21 der Schlingfeder 20 der zweiten Freilaufeinheit 16 stützt sich an der Anpressplatte 6 der Drehmomentübertragungseinrichtung 2 ab, um eine ungewollte Rückdrehung der Spindelwelle 11 entgegen der Verschleißnachstellung zu verhindern.

Im übrigen ist der Aufbau und die Funktion der Kupplungsvorrichtung 1 des zweiten Ausführungsbeispiels entsprechend dem Aufbau und der Funktion der Kupplungsvorrichtung 1 des ersten Ausführungsbeispiels.

Obwohl dies nicht gezeigt ist, ist es auch möglich, dass die erste Freilaufeinheit 15 eine Schlingfeder aufweist, während die zweite Freilaufeinheit 16 einen Hülsenfreilauf 18 aufweist. Ebenso ist es möglich, dass beide Freilaufeinheiten 15, 16 in unterschiedliche Drehrichtungen wirkende Schlingfedern 20 aufweisen.

Wenn die erste Freilaufeinheit 15 eine Schlingfeder aufweist, umschlingt die Schlingfeder die Spindelwelle 11 unter Eigenvorspannung und ist ausgebildet, abhängig von der Lage eines im Verschleißzustand veränderten Betriebspunkts der Kupplungsvorrichtung 1 bzw. der Drehmomentübertragungseinrichtung 2, mit der Spindelwelle 11 zur Verschleißnachstellung durch Verdrehung des Rampenrings 8 relativ zu den in die Anpressplatte 6 eingelassenen komplementären Gegenrampen in Kraftschluss, vorzugsweise in Reibschluss, zu treten. In diesem Fall ist ein Federende der Schlingfeder der ersten Freilaufeinheit 15 durch den in axialer Richtung A verlagerbaren Finger 13 der Sensiereinrichtung 4 zur Verschleißsensierung beaufschlagbar.

Wenn die zweite Freilaufeinheit 16, wie im zweiten Ausführungsbeispiel der Kupplungsvorrichtung 1, eine Schlingfeder 20 aufweist, umschlingt die Schlingfeder 20 die Spindelwelle 11 unter Eigenvorspannung und ist ausgebildet, zur Verhinderung der Rückdrehung der Spindelwelle 11 mit der Spindelwelle 11 in Kraftschluss, vorzugsweise in Reibschluss, zu treten.

Die vorangegangenen Ausführungsbeispiele betreffen eine Kupplungsvorrichtung 1 mit zumindest einer in axialer Richtung A durch ein Hebelelement 7 ein- und/oder ausrückbaren, im eingerückten Zustand reibschlüssigen Drehmomentübertragungseinrichtung 2 und zumindest einer Verschleißnachstelleinrichtung 3, die zumindest einen drehbaren und durch das Hebelelement 7 zumindest zeitweise klemmbaren Rampenring 8 und zumindest einen auf den Rampenring 8 wirkenden, drehbar gelagerten Spindeltrieb 9 mit einer Spindelwelle 11 aufweist, wobei die Verschleißnachstelleinrichtung 3 zumindest zwei stufenlose, in unterschiedliche Drehrichtungen wirkende Freilaufeinheiten 15, 16 aufweist, von denen eine erste Freilaufeinheit 15 zur Drehung der Spindelwelle 11 bei einem sensierten Verschleißzustand der Drehmomentübertragungseinrichtung 2 ausgebildet ist, und von denen eine zweite Freilaufeinheit 16 zur Verhinderung einer Rückdrehung der Spindelwelle 11 ausgebildet ist.

### Bezugszeichenliste

- 1: Kupplungsvorrichtung
- 2: Drehmomentübertragungseinrichtung
- 3: Verschleißnachstelleinrichtung
- 4: Sensiereinrichtung
- 5: Gehäuse
- 6: Anpressplatte
- 7: Hebelelement
- 8: Rampenring
- 9: Spindeltrieb
- 10: Halter
- 11: Spindelwelle
- 12: Spindelmutter
- 13: Finger
- 14: Nachführeinheit
- 15: erste Freilaufeinheit
- 16: zweite Freilaufeinheit
- 17: Hülsenfreilauf
- 18: Hülsenfreilauf
- 19: Betätigungshebel
- 20: Schlingfeder
- 21: Federende
- A: axiale Richtung
- R: radiale Richtung
- U: Umfangsrichtung

## Patentansprüche

1. Kupplungsvorrichtung (1) mit zumindest einer in axialer Richtung (A) durch ein Hebelelement (7) ein- und/oder ausrückbaren, im eingerückten Zustand reibschlüssigen Drehmomentübertragungseinrichtung (2) und zumindest einer Verschleißnachstelleinrichtung (3), die zumindest einen drehbaren und durch das Hebelelement (7) zumindest zeitweise klemmbaren Rampenring (8) und zumindest einen auf den Rampenring (8) wirkenden, drehbar gelagerten Spindeltrieb (9) mit einer Spindelwelle (11) aufweist, **dadurch gekennzeichnet, dass** die Verschleißnachstelleinrichtung (3) zumindest zwei stufenlose, in unterschiedliche Drehrichtungen wirkende Freilaufeinheiten (15, 16) aufweist, von denen eine erste Freilaufeinheit (15) zur Drehung der Spindelwelle (11) bei einem sensierten Verschleißzustand der Drehmomentübertragungseinrichtung (2) ausgebildet ist, und von denen eine zweite Freilaufeinheit (16) zur Verhinderung einer Rückdrehung der Spindelwelle (11) ausgebildet ist.

2. Kupplungsvorrichtung (1) nach Anspruch 1, wobei die erste Freilaufeinheit (15) oder die zweite Freilaufeinheit (16) eine Hülsenfreilauf (17, 18) aufweist.

3. Kupplungsvorrichtung (1) nach Anspruch 1 oder 2, wobei die zweite Freilaufeinheit (16) oder die erste Freilaufeinheit (15) eine Schlingfeder (20) aufweist.

4. Kupplungsvorrichtung (1) nach zumindest einem der Ansprüche 1 bis 3, wobei beide Freilaufeinheiten (15, 16) in unterschiedliche Drehrichtungen wirkende Hülsenfreiläufe (17,18) oder in unterschiedliche Drehrichtungen wirkende Schlingfedern (20) aufweisen.

5. Kupplungsvorrichtung (1) nach Anspruch 2 oder 4, wobei der Hülsenfreilauf (17, 18) auf der Spindelwelle (11) angeordnet ist und ausgebildet ist, abhängig von der Lage eines im Verschleißzustand veränderten Betriebspunkts der Drehmomentübertragungseinrichtung (2), mit der Spindelwelle (11) zur Verschleißnachstellung durch Verdrehung des Rampenrings (8) relativ zu komplementären Gegenrampen und/oder zur Verhinderung der Rückdrehung der Spindelwelle (11) in Kraftschluss, vorzugsweise in Reibschluss, zu treten.

6. Kupplungsvorrichtung (1) nach Anspruch 3 oder 4, wobei die Schlingfeder (20) die Spindelwelle (11) unter Eigenvorspannung umschlingt und ausgebildet ist, abhängig von der Lage eines im Verschleißzustand veränderten Betriebspunkts der Drehmomentübertragungseinrichtung (2), mit der Spindelwelle (11) zur Verschleißnachstellung durch Verdrehung des Rampenrings (8) relativ zu komplementären Gegenrampen und/oder zur Verhinderung der Rückdrehung der Spindelwelle (11) in Kraftschluss, vorzugsweise in Reibschluss, zu treten.

7. Kupplungsvorrichtung (1) nach zumindest einem der Ansprüche 1 bis 6, wobei eine Sensiereinrichtung (4) ausgebildet ist, einen Verschleißzustand der Drehmomentübertragungseinrichtung (2) beim Einrücken der Drehmomentübertragungseinrichtung (2) in Abhängigkeit von einem Abstand zu einem gehäusefesten Bauteil der Kupplungsvorrichtung (1), vorzugsweise einer Gegendruckplatte der Drehmomentübertragungseinrichtung (2), zu sensieren, und die erste Freilaufeinheit (15) durch die Sensiereinrichtung (4) beim Ausrücken der Drehmomentübertragungseinrichtung (2) zur Verschleißnachstellung durch Drehung der Spindelwelle (11) antreibbar ist.

8. Kupplungsvorrichtung (1) nach Anspruch 7, wobei die Sensiereinrichtung (4) einen, vorzugsweise an einer Anpressplatte (6) der Drehmomentübertragungseinrichtung (2) angeordneten, vorzugsweise in axialer Richtung (A) verlagerbaren, Finger (13) aufweist, durch den ein Betätigungshebel (19) des Hülsenfreilaufs (17) der ersten Freilaufeinheit (15) oder ein Federende der Schlingfeder der ersten Freilaufeinheit (15) beaufschlagbar ist.

9. Kupplungsvorrichtung (1) nach zumindest einem der Ansprüche 1 bis 8, wobei die Verschleißnachstelleinrichtung (3) eine, vorzugsweise rampenförmige, Nachführeinheit (14) zur Nachführung der Vorspannung und/oder der Winkellage der auf der Spindelwelle (11) angeordneten ersten Freilaufeinheit (15) aufweist.

10. Kupplungsvorrichtung (1) nach zumindest einem der Ansprüche 2 bis 9, wobei sich ein Betätigungshebel des Hülsenfreilaufs (18) der zweiten Freilaufeinheit (16) oder ein Federende (21) der Schlingfeder (20) der zweiten Freilaufeinheit (16) an einer Anpressplatte (6) der Drehmomentübertragungseinrichtung (2) abstützt.

## Claims

1. Clutch device (1) having at least one torque-transmitting device (2) which can be engaged and/or disengaged in the axial direction (A) by a lever element (7) and is frictionally locking in the engaged state, and at least one wear-adjustment device (3) which has at least one ramp ring (8) which can be rotated and at least temporarily clamped by the lever element (7), and at least one rotatably mounted spindle drive (9) which acts on the ramp ring (8) and has a spindle shaft (11), **characterized in that** the wear-adjustment device (3) has at least two infinitely variable free-wheeling units (15, 16) which act in different rotational directions, the first free-wheeling unit (15) of which is designed to rotate the spindle shaft (11) when a state of wear of the torque-transmitting device (2) is sensed, and a second free-wheeling unit (16) of which is designed to prevent reverse rotation of the spindle shaft (11).

2. Clutch device (1) according to Claim 1, wherein the first free-wheeling unit (15) or the second free-wheeling unit (16) has a sleeve-type free-wheel (17, 18).

3. Clutch device (1) according to Claim 1 or 2, wherein the second free-wheeling unit (16) or the first free-wheeling unit (15) has a wrap spring (20).

4. Clutch device (1) according to at least one of Claims 1 to 3, wherein the two free-wheeling units (15, 16) have sleeve-type free-wheels (17, 18) which act in different rotational directions, or wrap springs (20) which act in different rotational directions.

5. Clutch device (1) according to Claim 2 or 4, wherein the sleeve-type free wheel (17, 18) is arranged on the spindle shaft (11) and designed to enter, as a function of the position of an operating point, changed in the state of wear, of the torque-transmitting device (2), into non-positive engagement, preferably into frictional engagement, with the spindle shaft (11) in order to adjust the wear by rotating the ramp ring (8) relative to complementary corresponding ramps and/or to prevent the reverse rotation of the spindle shaft (11).

6. Clutch device (1) according to Claim 3 or 4, wherein the wrap spring (20) wraps around the spindle shaft (11) under its own prestress and is designed to enter, as a function of the position of an operating point, changed in the state of wear, of the torque-transmitting device (2), into non-positive engagement, preferably into frictional engagement, with the spindle shaft (11) in order to adjust the wear by rotating the ramp ring (8) relative to complementary corresponding ramps and/or to prevent the reverse rotation of the spindle shaft (11).

7. Clutch device (1) according to at least one of Claims 1 to 6, wherein a sensing device (4) is designed to sense a state of wear of the torque-transmitting device (2) when the torque-transmitting device (2) engages, as a function of a distance from a component of the clutch device (1), preferably a corresponding pressure plate of the torque-transmitting device (2), which is fixed to the housing, and the first free-wheeling unit (15) can be driven by the sensing device (4) when the torque-transmitting device (2) disengages, in order to adjust the wear by rotating the spindle shaft (11).

8. Clutch device (1) according to Claim 7, wherein the sensing device (4) has a finger (13) which is preferably arranged on a contact pressure plate (6) of the torque-transmitting device (2), and is preferably movable in the axial direction (A) and by means of which an actuation lever (19) of the sleeve-type free-wheel (17) of the first free-wheeling unit (15) or a spring end of the wrap spring of the first free-wheeling unit (15) can be acted on.

9. Clutch device (1) according to at least one of Claims 1 to 8, wherein the wear-adjustment device (3) has a preferably ramp-shaped adjustment unit (14) for adjusting the prestress and/or the angle of position of the first free-wheeling unit (15) which is arranged on the spindle shaft (11).

10. Clutch device (1) according to at least one of Claims 2 to 9, wherein an actuation lever of the sleeve-type free wheel (18) of the second free-wheeling unit (16) or a spring end (21) of the wrap spring (20) of the second free-wheeling unit (16) is supported on a contact pressure plate (6) of the torque-transmitting device (2).

## Revendications

1. Dispositif d'embrayage (1) comprenant au moins un dispositif de transmission de couple (2) à engagement par friction à l'état enclenché et pouvant être enclenché et/ou désenclenché dans la direction axiale (A) par un élément de levier (7) et comprenant au moins un dispositif de rattrapage d'usure (3) qui comprend au moins une bague à rampes (8) rotative et pouvant être serrée au moins temporairement par l'élément de levier (7) et au moins un entraînement à broche (9) doté d'un arbre de broche (11), monté à rotation et agissant sur la bague à rampes (8), **caractérisé en ce que** le dispositif de rattrapage d'usure (3) comprend au moins deux unités de roue libre (15, 16) continues agissant dans des sens de rotation différents, parmi lesquelles une première unité de roue libre (15) est réalisée pour faire tourner l'arbre de broche (11) en cas de détection d'un état d'usure de l'unité de transmission de couple (2), et parmi lesquelles une deuxième unité de roue libre (16) est réalisée pour empêcher une rotation en sens inverse de l'arbre de broche (11).

2. Dispositif d'embrayage (1) selon la revendication 1, dans lequel la première unité de roue libre (15) ou la deuxième unité de roue libre (16) comprend une roue libre à douille (17, 18).

3. Dispositif d'embrayage (1) selon la revendication 1 ou 2, dans lequel la deuxième unité de roue libre (16) ou la première unité de roue libre (15) comprend un ressort enroulé (20).

4. Dispositif d'embrayage (1) selon au moins l'une quelconque des revendications 1 à 3, dans lequel les deux unités de roue libre (15, 16) comprennent des roues libres à douille (17, 18) agissant dans des sens de rotation différents ou des ressorts enroulés (20) agissant dans des sens de rotation différents.

5. Dispositif d'embrayage (1) selon la revendication 2 ou 4, dans lequel la roue libre à douille (17, 18) est disposée sur l'arbre de broche (11) et est réalisée pour, en fonction de la position d'un point de fonctionnement, modifié à l'état d'usure, du dispositif de transmission de couple (2), venir en engagement par force, de préférence en engagement par friction, avec l'arbre de broche (11) pour rattraper l'usure par rotation de la bague à rampes (8) par rapport à des rampes conjuguées complémentaires et/ou pour empêcher la rotation en sens inverse de l'arbre de broche (11).

6. Dispositif d'embrayage (1) selon la revendication 3 ou 4, dans lequel le ressort enroulé (20) entoure l'arbre de broche (11) sous l'effet de sa propre précontrainte et est réalisé pour, en fonction de la position d'un point de fonctionnement, modifié à l'état d'usure, du dispositif de transmission de couple (2), venir en engagement par force, de préférence en engagement par friction, avec l'arbre de broche (11) pour rattraper l'usure par rotation de la bague à rampes (8) par rapport à des rampes conjuguées complémentaires et/ou pour empêcher la rotation en sens inverse de l'arbre de broche (11).

7. Dispositif d'embrayage (1) selon au moins l'une quelconque des revendications 1 à 6, dans lequel un dispositif de détection (4) est réalisé pour détecter un état d'usure du dispositif de transmission de couple (2) en cas d'enclenchement du dispositif de transmission de couple (2), en fonction d'une distance à un composant, fixé au boîtier, du dispositif d'embrayage (1), de préférence à un plateau de pression conjugué du dispositif de transmission de couple (2), et la première unité de roue libre (15) peut être entraînée par le dispositif de détection (4) en cas de désenclenchement du dispositif de transmission de couple (2) en vue du rattrapage de l'usure par rotation de l'arbre de broche (11).

8. Dispositif d'embrayage (1) selon la revendication 7, dans lequel le dispositif de détection (4) comprend un doigt (13) disposé de préférence sur un plateau presseur (6) du dispositif de transmission de couple (2), et de préférence déplaçable dans la direction axiale (A), au moyen duquel un levier d'actionnement (19) de la roue libre à douille (17) de la première unité de roue libre (15) ou une extrémité de ressort du ressort enroulé de la première unité de roue libre (15) peut être sollicité(e).

9. Dispositif d'embrayage (1) selon au moins l'une quelconque des revendications 1 à 8, dans lequel le dispositif de rattrapage d'usure (3) comprend une unité de réglage (14) de préférence en forme de rampe pour le réglage de la précontrainte et/ou de la position angulaire de la première unité de roue libre (15) disposée sur l'arbre de broche (11).

10. Dispositif d'embrayage (1) selon au moins l'une quelconque des revendications 2 à 9, dans lequel un levier d'actionnement de la roue libre à douille (18) de la deuxième unité de roue libre (16) ou une extrémité de ressort (21) du ressort enroulé (20) de la deuxième unité de roue libre (16) s'appuie contre un plateau presseur (6) du dispositif de transmission de couple (2).
